# EUROPEAN PATENT SPECIFICATION

(11) **EP 3 543 176 B1**
(45) Date of publication and mention of the grant of the patent: **27.08.2025**
(21) Application number: 19163041.7
(22) Date of filing: 15.03.2019
(51) Int. Cl.: B65G 1/04, B65G 1/14

(54) **STORAGE RACK FOR ROD-SHAPED PROFILED ELEMENTS**
LAGERGESTELL FÜR PROFILELEMENTEN
SUPPORT DE STOCKAGE DE PROFILÉS

(30) Priority: 22.03.2018 IT 201800003881
(43) Date of publication of application: 25.09.2019
(73) Proprietor: PRESEZZI EXTRUSION SPA, 20871 Vimercate (MB) (IT)
(72) Inventor: Ronchi, Fabio, 25080 Nuvolera (BS) (IT); Bono, Rossano, 25038 Rovato (BS) (IT)
(74) Representative: Ripamonti, Enrico

(56) References cited:
- EP-A1- 1 145 992
- US-A- 1 393 054
- US-A1- 2007 119 800

## Description

The present invention relates to a stacking station. It could also relate to a de-stacking station.

Stacking stations for stacking profiled elements are known. They are used in the processes for forming extruded aluminium profiled elements. The process is known in which aluminium billets are cut into chunks and inserted into presses after being heated in a kiln. The profiled elements thus obtained are cooled, cut, cooled again and sent to an ironing press for uniforming size and materials. At this point, in the stacking station the profiled elements are collected and positioned in a basket while waiting to be sent to an aging kiln. Once the thermal cycle has finished, the profiled elements are packaged, weighed and are then ready for shipment.

Various kinds of stacking stations are known.

A first type is known as a slat stacking system. In that case, the profiled elements are rested on a plurality of slats arranged orthogonally to the profiled elements. An aerial handler member moves slats (and the profiled elements placed on them) positioning them on vertical bars of a basket. A drawback of this solution is connected with the fact that the slats in such a solution enter the production cycle and then need to be separated from the profiled elements downstream of the basket, collected and repositioned to be re-used. Furthermore, during these movements, the slats can be deformed or damaged and require manual intervention for their replacement.

A second type is known as a lance stacking system. In that case the profiled elements are loaded into a basket, on top of one another, by supply belts. It is mainly used for bars intended for subsequent processing considering the possibility of damage. It is a less delicate and more rudimentary system than the previous one.

A third type is known as a basket stacking system. In that case, very large baskets are used. They further comprise a series of horizontal bars arranged transversally to the positioning direction of the profiled elements and arranged on top of each other at various heights. The baskets also comprise vertical rods to which the bars are welded. The basket can be lifted and lowered to allow the insertion of the profiled elements at the desired height. A drawback of such solution is connected with the fact that the basket has a rigid and very bulky structure. This has a negative impact also in energy terms as they occupy large volumes inside aging kilns without any optimisation of the necessary spaces for supporting the profiled elements to be subjected to heat treatment.

The three types indicated above are automatic stacking systems. There are also manual stacking systems, in which the profiled elements are taken and placed in the basket by an operator.

It is also known a stacking station of the type disclosed in US1393054 and EP1145992. EP1145992 relates to a rack for stacking metal sections. This document discloses a stacking station having the features of the preamble of Claim 1.

The object of the present invention is to provide a stacking station that allows maximum operating flexibility allowing the dimensions to be reduced at the same time.

The stated technical task and the specified objects are substantially achieved by a stacking station comprising the technical features disclosed in claim 1 and by the method of claim 7.

Further characteristics and advantages of the present invention will become more apparent from the following indicative and therefore nonlimiting description of a stacking station as illustrated in the appended drawings, in which:
- figure 1 shows a front view of a stacking station;
- figure 2 shows a part of the section A-A of figure 1 ;
- figure 3 shows a front view of the stacking station of figure 1 in a different configuration;
- figure 4 shows a part of the section B-B of figure 1 ;
- figure 5 shows a front view of the stacking station of figure 1 or 3 in a different configuration;
- figure 6 shows a part of the section C-C of figure 1 ;

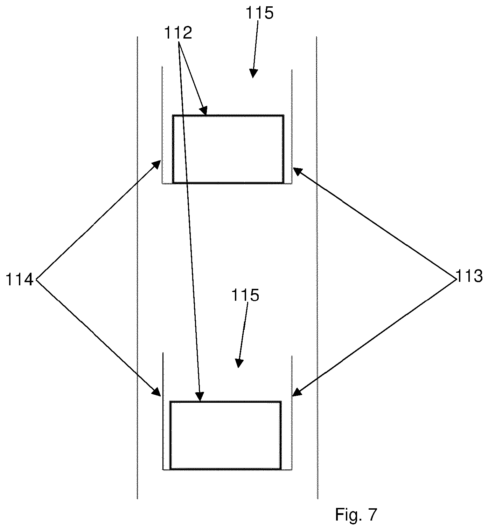

- figure 7 shows a detail of the stacking station according to the present invention;
- figure 8 shows a perspective view of a stacking station according to the present invention;
- figure 9 shows a front view of a detail of the station of figure 8 ;
- figures 10, 11 and 12 show three different configurations of the stacking station according to the present invention.

In the appended figures the reference number 1 indicates a stacking station for stacking rod-shaped profiled elements made of aluminium (meaning alloy comprising aluminium). Such profiled elements have a predominant longitudinal extension. The profiled elements are typically obtained by extrusion. The station 1 comprises at least one basket 10.

The basket 10 comprises support bars 112 of the profiled elements. Such bars 112 are also called "slats" or "dividers" in the technical field. Such bars 112 extend transversally, preferably orthogonally, to a loading direction of the profiled elements in the stacking station 1. The bars 112 extend horizontally. The bars 112 are all parallel to one other. Distinct bars 112 are located at different heights. A plurality of bars extends on top of one another along successive vertical planes that extend along the loading direction of the profiled elements in the stacking station 1. A plurality of bars 112 are located one after the other (along the loading direction of the profiled elements) and operate jointly for supporting at the same height at least one of said profiled elements (which is then positioned horizontally). The basket 10 also comprises support means 113 of the support bars 112. On this point, the basket 10 comprises pairs of uprights 117 that extend between the top and the bottom along which the support means 113 are placed. Such uprights 117 are located along side flanks opposite the basket 10. The bars 112 extend between a same pair of uprights 117. The support bars 112 are removable from the support means 113. This facilitates replacement in the event of damage.

The support means 113 comprise pairs of seats 114 at the ends of which a corresponding bar 112 is inserted. It is possible to remove every individual bar 112 independently from the other bars 112. The removal of the bars 112 takes place manually without the use of tools.

Each pair of said seats 114 is intended to support a corresponding bar 112. Each of said seats 114 defines a concavity 115 that is open in an upwards direction.

The support bars 112 can be inserted from above into the concavity 115. The bars 112 can therefore be simply extracted by lifting the support means 113 and removed.

However, during the operation of the stacking station 1, the removal of the bars 112 from the support means 113 is not envisaged (or necessary).

The stacking station 1 (or the basket 10) also comprises modulating means 116 of the vertical component of the distance between the support means 113 of the support bars 112. Therefore they allow a modulation/adjustment of such vertical component. This is with the aim of changing the vertical pitch at which to position the profiled elements. This takes place by vertically moving at least a part of the support means 113. In particular, the support means 113 are placed along a plurality of vertical planes in succession with each other. The modulating means 116 allow the movement of the support means 113 that are located on one of said vertical planes with respect to the support means 113 that are located on other vertical planes (this can be advantageously repeated for each group of support means 113 lying on the same vertical plane). The modulating means 116 therefore allow a basket 10 to be provided that can be defined "with modular slats" (wherein the slats are bars 112) or even "modulating basket". The modulation of the vertical pitch between the profiled elements takes place as a function of the specific requirements of the profiled elements (height of the profiled elements, quantity of air that needs to circulate between the layers of profiled elements in the subsequent step in the aging kiln, etc.).

Appropriately the modulating means 116 acting on the support means 113 move various support bars 112 simultaneously. Advantageously, the modulating means 116 allow the support means 113 to be positioned in a discrete number of positions. Therefore, the vertical pitch of the profiled elements can be adjusted between a discrete number of positions. The user can choose the desired vertical pitch of the profiled elements (spacing). It can be selected between a number of predefined values.

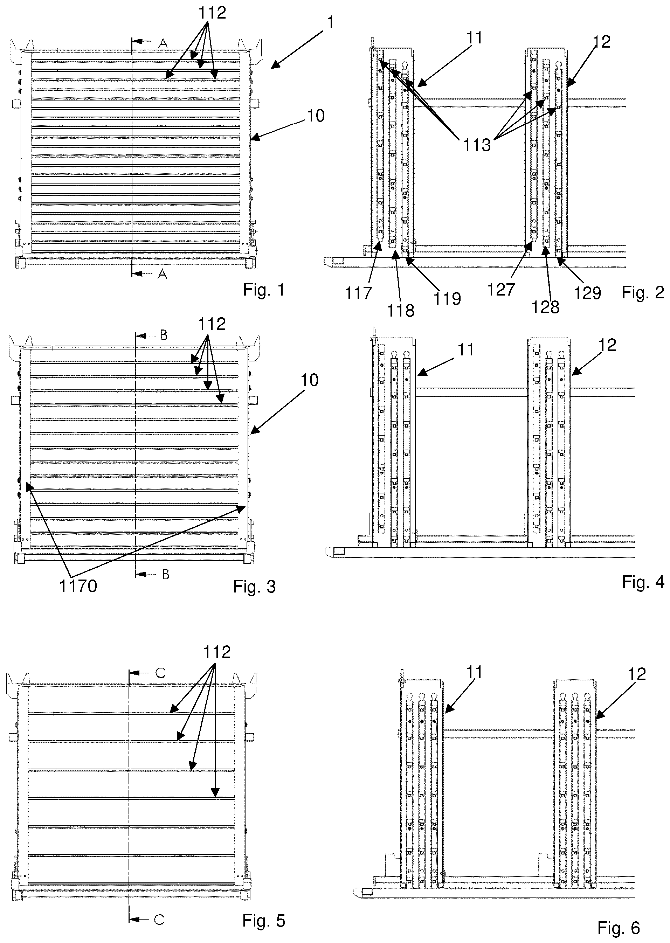

For example, in the configuration of figure 1 the basket 10 has a smaller vertical pitch of the profiled elements with respect to the configuration of figure 3 which in turn is even smaller with respect to the one assumed in the configuration of figure 5. The support bars 112 are distributed on various vertical planes.

In figure 5 to maximise the vertical pitch of the profiled elements the support means 113 of the bars 112 that lie on a first vertical plane are horizontally aligned with corresponding support means 113 of the bars 112 that lie on all the remaining vertical planes. In figure 3, and even more so in figure 1, the support means 113 of the bars 112 that lie on the first vertical plane are horizontally staggered with a greater number of support means 113 which lie on the remaining vertical planes with respect to the configuration of figure 1. The basket 10 comprises a first and a second support station 11, 12. The first and the second support station 11, 12 are arranged in succession with each other and operate jointly to support at least one of said profiled elements. The first and the second station 11, 12 are in succession along a loading direction of the profiled elements into the stacking station 1. The first and the second station 11, 12 are in succession along two different pairs of uprights 1170.

In practice, the first and second station 11, 12 define two support zones of a same profiled element. This allows the profiled elements to be kept substantially horizontal. Advantageously, a number of stations greater than three are present (in the solution illustrated in the appended figures there are eight) to allow suitable support of the profiled elements by distributing the weight on various contact points.

The first and the second station 11, 12 are intended to support respectively a first and a second group 111, 121 of said bars 112.

The bars of the first group 111 (those of the first station 11) are organised on a plurality of vertical planes 117, 118, 119, preferably three, as exemplified in figure 2, 4, 6. Also the bars of the second group 121 (those of the second station) lie on a plurality of flanked vertical planes 127, 128, 129, preferably three, (again as exemplified in figure 2, 4, 6). The bars of the first group 111 are further from the bars of the second group 121 than the distance that passes between the vertical planes of the bars of the first group 111. Advantageously, the bars of the first group 111 and the bars of the second group 121 are at least 50 centimetres from each other. The first and the second station 11, 12 each comprise two side flanks between which the bars of the first and of the second group 111, 121 respectively extend.

The modulating means 116 comprise a first handler member 3 suitable for activating the support means 113 of the first group 111 of bars; such first handler member 3 can assume a discrete number of configurations to which a different pitch corresponds between the bars of the first group 111; such first handler member 3 can be activated by an actuator; each configuration of the first handler member 3 corresponds to a predetermined position of the support means 113 of the first group 111 of bars.

The modulating means 116 further comprise a second handler member 4 that adjusts the vertical component of the distance between the bars of the second group 121. The first and the second handler member 3, 4 could be activated by a common actuator.

The stacking station 1 also comprises supply means (not illustrated) of profiled elements to the basket 10. Such supply means are placed downstream of the basket 10. They comprise, for example, a roller or a supply belt. The station 1 also comprises advancing means 15 of the profiled elements between the first and the second station 11, 12. The advancing means 15 of the profiled elements comprise at least a motorised roller 151. The stacking station 1 further comprises raising/lowering means 14 of the basket 10 with respect to the advancing means 15. Appropriately, the station 1 comprises raising/lowering means 16 joined to the basket 10 and the advancing means 15 with respect to an absolute reference fixed in space. The raising/lowering means 16 allow the supply means to be aligned with at least one of said bars 112. In this way the profiled element at the outlet from the supply means is housed in the basket 10. First the lower portion of the basket 10 is filled and then the upper portion. The raising/lowering means 14 of the basket 10 with respect to the advancing means 15 allow the advancing means 15 to be aligned with the profile that is being inserted into the basket 10 in order to facilitate the advancement thereof.

The subject matter of the present invention is a stacking station. The stacking station can also be used as de-stacking station.

The subject matter of the present invention is also an operating method of a stacking station 1 for stacking profiled elements made of aluminium of the present invention.

The method comprises the steps of:
- adjusting the vertical component of the distance between the support means 113;
- positioning the profiled elements on the support bars 112 which have been previously placed on the support means 113.

The step of adjusting the vertical component of the distance between the support means 113 of the first group 111 envisages moving at least a portion of the support bars 112 supported by said support means 113.

The step of adjusting the vertical component of the distance between the support means 113 envisages adjusting the vertical pitch of the bars of the first and second station 11, 12. For example, figures 1, 3, 5 highlight three alternative adjustments showing the variation of the vertical pitch.

The profiled elements are positioned on the basket 10 advantageously through supply means, such as a roller or a belt. The supply means preferably lie at a fixed height. Advantageously the profiled elements are loaded into the lower portion of the basket 10 and the upper portions of the basket 10 are loaded gradually. This is possible through raising/lowering means 16 joined to the basket 10 and the advancing means 15 with respect to an absolute reference fixed in space. They allow the bars 112 intended to house the lower layer of profiled elements to be aligned with the supply means and then to gradually lower the basket 10 for filling the upper bars 112 with the profiled elements.

Furthermore, such operation is also accompanied by a movement of the raising/lowering means 14 of the basket 10 with respect to the advancing means 15. In this way, the advancing means 15 are positioned at the same level as the supply means for facilitating the advancement of the profiled elements along the basket 10.

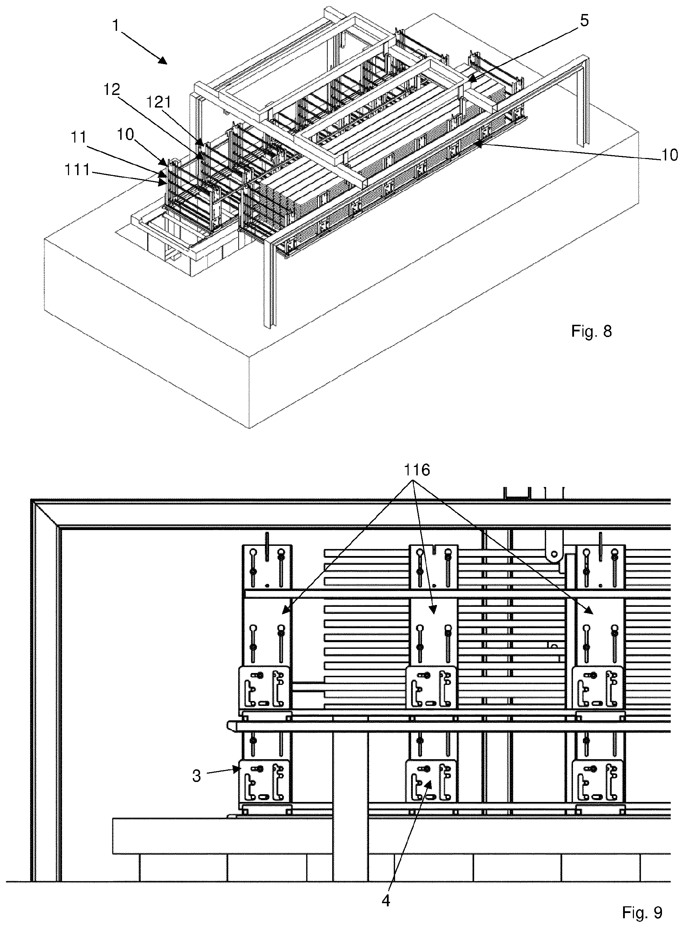

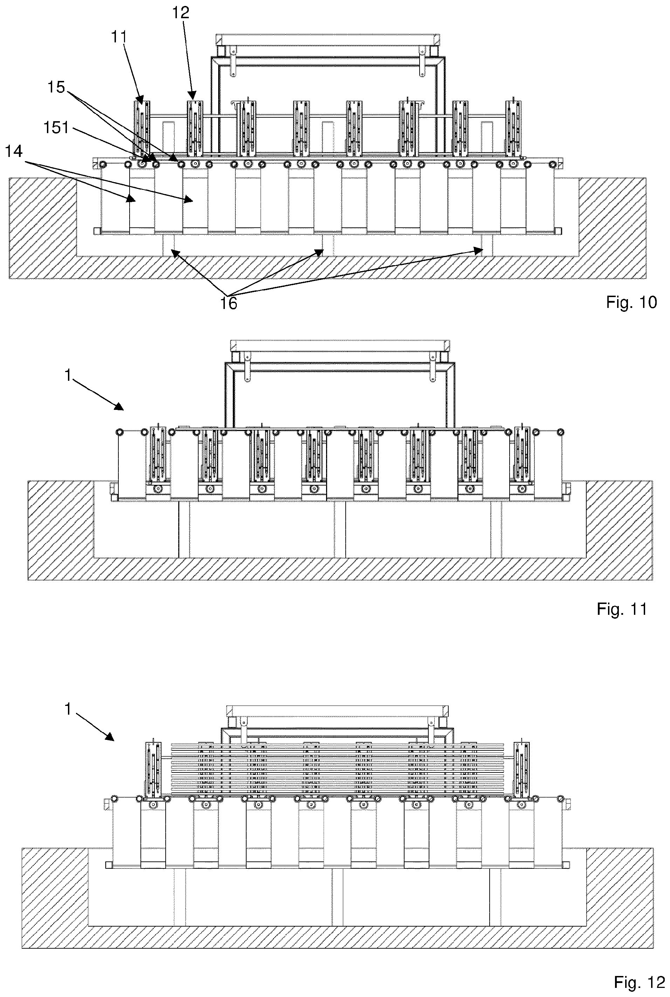

Once the basket 10 has been filled, it can be removed from the stacking station 1 through, for example, an aerial handler member 5, as shown in figures 8 and 12.

The present invention achieves important advantages.

Above all, it prevents the support bars of the profiled elements from being removed from the basket to circulate along some steps of the cycle. Therefore, the step of having to recover such bars for repositioning them on the basket is prevented. Furthermore, it has maximum operating flexibility, allowing the vertical pitch between different layers of profiled elements to be adjusted, managing to contain the dimensions of the basket. Furthermore, the maintenance of the bars 112 is extremely easy.

The invention as it is conceived is susceptible to numerous modifications and variations, the scope of protection of the invention being defined by the appended claims.

In practice, all the materials used, as well as the dimensions, can be any according to requirements.

## Claims

1. A stacking station for stacking rod-shaped profiled elements made of aluminium, comprising a basket (10) in turn comprising:
- support bars (112) of the profiled elements;
- support means (113) of the support bars (112);
- a plurality of pairs of uprights (117-119; 127-129) that extend between the top and the bottom along which the support means (113) are placed, said uprights (117-119; 127-129) being located along side flanks opposite the basket (10), the support bars (112) extending between a same pair of uprights (117-119; 127-129);
so that the pairs of uprights (117-119; 127-129) with their respective support bars (112) are located in successive vertical planes that extend along the loading direction of the profiled elements in the stacking station (1);
- modulating means (116) of the vertical component of the distance between the support means (113) of the support bars (112),
wherein the modulating means (116) allow a vertical movement of a pair of uprights (117-119; 127-129) and its support means (113) that are located on one of said vertical planes with respect to the pair of uprights (117-119; 127-129) and their support means (113) that are located on other vertical (3) planes; **characterized in that** the support means (113) comprise pairs of seats each defining a concavity (115) that is open in an upwards direction, the support bars (112) being insertable from above into said concavity (115)
so that the support bars (112) are removable from the support means (113).

2. The station according to claim 1, **characterised in that** the support means (113) are distributed on a plurality of flanked vertical planes; in a first configuration the support means (113) of the bars (112) lying on a first of said vertical planes are aligned horizontally to corresponding support means (113) of the bars (112) which lie on all the remaining vertical planes; in a second configuration the support means (113) of the bars (112) lying on the first vertical plane are horizontally staggered with a greater number of support means (113) which lie on the remaining vertical planes with respect to the first configuration.

3. The station according to claim 2, **characterised in that** the modulating means (116) simultaneously move a plurality of support bars (112); the modulating means (116) enable displacement of the support means (113) which are located on one of said vertical planes with respect to the support means (113) which are located on another of said vertical planes.

4. The station according to any one of the preceding claims, **characterised in that** it comprises a first and a second support station (11, 12) destined to support a first and a second group (111, 112) of bars (112), respectively.

5. The station according to claim 4, **characterised in that** it comprises:
- advancing means (15) of the profiled elements between the first and the second station (11, 12); the advancing means (15) of the profiled elements comprising at least a motorised roller (151);
- raising/lowering means (14) of the basket (10) with respect to the advancing means (15);
- raising/lowering means (16) of the basket (10) and the advancing means (15) with respect to an absolute reference fixed in space.

6. The station according to claim 4 or 5, **characterised in that** the first and the second group (111, 121) of support bars are located in succession along an advancement direction of the profiled elements in the basket (10);
the modulating means (116) comprising a first handler member (3) suitable for activating the support means (113) of the first group (111) of bars (112); the first handler member (3) can assume a discrete number of configurations to which a different pitch between the bars of the first group (111) corresponds.

7. An operating method of a stacking station (1) of profiled elements made of aluminium according to any one of the preceding claims, comprising the steps of:
- adjusting the vertical component of the distance between the support means (113) of the support bars (112);
- positioning the profiled elements on the support bars (112) which have been previously placed on the support means (113) of the first group (111).

8. A method of claim 7, **characterised in that** the regulation between the vertical component of the distance between the support means (113) includes displacing at least a portion of the support bars (112) supported by said support means (113).

## Patentansprüche

1. Stapelstation zum Stapeln von stabförmig profilierten Elementen aus Aluminium, umfassend einen Korb (10), der seinerseits Folgendes umfasst:
- Haltestangen (112) der profilierten Elemente;
- Halteeinrichtungen (113) der Haltestangen (112);
- eine Vielzahl von Paaren von Pfosten (117-119; 127-129), die sich zwischen der Oberseite und der Unterseite erstrecken, entlang derer die Halteeinrichtungen (113) platziert sind, wobei sich die Ständer (117-119; 127-129) entlang seitlicher Flanken gegenüber dem Korb (10) befinden, wobei sich die Haltestangen (112) zwischen einem gleichen Ständerpaar (117-119; 127-129) erstrecken;
sodass sich die Ständerpaare (117-119; 127-129) mit ihren jeweiligen Haltestangen (112) in aufeinanderfolgenden vertikalen Ebenen angeordnet sind, die sich entlang der Beladerichtung der profilierten Elemente in der Stapelstation (1) erstrecken;
- Modulierungseinrichtungen (116) für die vertikale Komponente des Abstands zwischen den Halteeinrichtungen (113) der Haltestangen (112),
wobei die Modulierungseinrichtungen (116) eine vertikale Bewegung eines Ständerpaars (117-119; 127-129) und ihrer Halteeinrichtungen (113), die sich auf einer der vertikalen Ebenen befinden, in Bezug auf das Ständerpaar (117-119; 127-129) und ihrer Halteeinrichtungen (113), die sich auf anderen vertikalen (3) Ebenen befinden, ermöglichen; **dadurch gekennzeichnet, dass** die Halteeinrichtungen (113) Sitzpaare umfassen, die jeweils eine Aushöhlung (115) definieren, die in Aufwärtsrichtung offen ist, wobei die Haltestangen (112) von oben in die Aushöhlung (115) einführbar sind, sodass die Haltestangen (112) aus den Halteeinrichtungen (113) entnehmbar sind.

2. Station nach Anspruch 1, **dadurch gekennzeichnet, dass** die Halteeinrichtungen (113) auf eine Vielzahl von flankierten vertikalen Ebenen verteilt sind; in einer ersten Konfiguration die Halteeinrichtungen (113) der Stangen (112), die auf einer ersten der vertikalen Ebenen liegen, horizontal zu entsprechenden Halteeinrichtungen (113) der Stäbe (112) ausgerichtet sind, die auf allen übrigen vertikalen Ebenen liegen; in einer zweiten Konfiguration die Halteeinrichtungen (113) der Stäbe (112), die auf der ersten vertikalen Ebene liegen, horizontal mit einer größeren Anzahl von Halteeinrichtungen (113) versetzt sind, die auf den verbleibenden vertikalen Ebenen liegen, als in Bezug auf die erste Konfiguration.

3. Station nach Anspruch 2, **dadurch gekennzeichnet, dass** die Modulierungseinrichtungen (116) gleichzeitig eine Vielzahl von Haltestangen (112) bewegen; die Modulierungseinrichtungen (116) eine Verlagerung der Halteeinrichtungen (113), die sich auf einer der vertikalen Ebenen befinden, in Bezug auf die Halteeinrichtungen (113), die sich auf einer anderen der vertikalen Ebenen befinden, ermöglichen.

4. Station nach einem der vorherigen Ansprüche, **dadurch gekennzeichnet, dass** sie eine erste und eine zweite Haltestation (11, 12) umfasst, die dazu bestimmt sind, jeweils eine erste und eine zweite Gruppe (111, 112) von Stangen (112) zu halten.

5. Station nach Anspruch 4, **dadurch gekennzeichnet, dass** sie Folgendes umfasst:
- Vorschubeinrichtungen (15) der profilierten Elemente zwischen der ersten und der zweiten Station (11, 12); die Vorschubeinrichtungen (15) der profilierten Elemente umfassend mindestens eine motorisierte Rolle (151);
- Hebe-/Absenkeinrichtungen (14) des Korbs (10) in Bezug auf die Vorschubeinrichtungen (15);
- Hebe-/Absenkeinrichtungen (16) des Korbs (10) und der Vorschubvorrichtungen (15) in Bezug auf einen absoluten, im Raum festgelegten Bezugspunkt.

6. Station nach Anspruch 4 oder 5, **dadurch gekennzeichnet, dass** sich die erste und die zweite Gruppe (111, 121) von Haltestangen entlang einer Vorschubrichtung der profilierten Elemente in dem Korb (10) hintereinander befinden;
die Modulierungseinrichtungen (116) umfassend ein erstes Handhabungselement (3), das geeignet ist, um die Halteeinrichtungen (113) der ersten Gruppe (111) von Stangen (112) zu aktivieren; wobei das erste Handhabungselement (3) eine separate Anzahl von Konfigurationen annehmen kann, denen ein unterschiedlicher Abstand zwischen den Stangen der ersten Gruppe (111) entspricht.

7. Betriebsverfahren einer Stapelstation (1) von profilierten Elemente aus Aluminium nach einem der vorherigen Ansprüche, umfassend die Folgendes Schritte:
- Einstellen der vertikalen Komponente des Abstands zwischen den Halteeinrichtungen (113) der Haltestangen (112);
- Positionieren der profilierten Elemente auf den Haltestangen (112), die zuvor auf den Halteinrichtungen (113) der ersten Gruppe (111) platziert wurden.

8. Verfahren nach Anspruch 7, **dadurch gekennzeichnet, dass** die Regulierung der vertikalen Komponente des Abstands zwischen den Halteeinrichtungen (113) ein Verlagern mindestens eines Abschnitts der von den Halteeinrichtungen (113) gehaltenen Haltestangen (112) umfasst.

## Revendications

1. Station d'empilage destinée à l'empilage d'éléments profilés en tige faits en aluminium, comprenant un panier (10) qui en retour comprend :
- des barres d'appui (112) des éléments profilés ;
- des moyens de support (113) des barres d'appui (112) ;
- une pluralité de paires de montants (117-119 ; 127-129) qui s'étendent entre le haut et le bas et le long desquels sont placés les moyens de support (113), lesdits montants (117-119 ; 127-129) étant situés le long des flancs latéraux opposés au panier (10), les barres d'appui (112) s'étendant entre une même paire de montants (117-119 ; 127-129) ;
de sorte que les paires de montants (117-119 ; 127-129) avec leurs barres d'appui respectives (112) soient situées dans des plans verticaux successifs qui s'étendent le long de la direction de chargement des éléments profilés dans la station d'empilage (1) ;
- des moyens de modulation (116) du composant vertical de la distance entre les moyens de support (113) des barres d'appui (112),
dans laquelle les moyens de modulation (116) assurent le déplacement vertical d'une paire de montants (117-119 ; 127-129) et de ses moyens de support (113) situés sur l'un desdits plans verticaux par rapport à la paire de montants (117-119 ; 127- 129) et à ses moyens de support (113) situés sur d'autres plans verticaux (3) ; **caractérisé en ce que** les moyens de support (113) comprennent des paires de sièges définissant chacun une concavité (115) ouverte vers le haut, les barres d'appui (112) pouvant être insérées par le haut dans ladite concavité (115) de sorte que les barres d'appui (112) puissent être retirées des moyens de support (113).

2. Station selon la revendication 1, **caractérisée en ce que** les moyens de support (113) sont répartis sur une pluralité de plans verticaux flanqués ; dans une première configuration, les moyens de support (113) des barres (112) se trouvant sur un premier desdits plans verticaux sont alignés horizontalement sur les moyens de support correspondants (113) des barres (112) qui reposent sur tous les plans verticaux restants ; dans une deuxième configuration, les moyens de support (113) des barres (112) reposant sur le premier plan vertical sont décalés horizontalement par rapport à un plus grand nombre de moyens de support (113) reposant sur les plans verticaux restants par rapport à la première configuration.

3. Station selon la revendication 2, **caractérisée en ce que** les moyens de modulation (116) déplacent simultanément une pluralité de barres d'appui (112) ; les moyens de modulation (116) permettent de déplacer les moyens de support (113) qui sont situés sur l'un desdits plans verticaux par rapport aux moyens de support (113) qui sont situés sur un autre desdits plans verticaux.

4. Station selon l'une quelconque des revendications précédentes, **caractérisée en ce qu'**elle comprend une première et une deuxième station de support (11, 12) destinées à soutenir un premier et un deuxième groupe (111, 112) de barres (112), respectivement.

5. Station selon la revendication 4, **caractérisée en ce qu'**elle comprend :
- des moyens d'avancement (15) des éléments profilés entre la première et la deuxième station (11, 12) ; les moyens d'avancement (15) des éléments profilés comprenant au moins un rouleau motorisé (151) ;
- des moyens de levage/abaissement (14) du panier (10) par rapport aux moyens d'avancement (15) ;
- des moyens de levage/abaissement (16) du panier (10) et des moyens d'avancement (15) par rapport à une référence absolue fixée dans l'espace.

6. Station selon la revendication 4 ou 5, **caractérisée en ce que** le premier et le deuxième groupe (111, 121) de barres de support sont situés successivement le long d'une direction d'avancement des éléments profilés dans le panier (10) ;
les moyens de modulation (116) comprennent un premier élément de préhension (3) pouvant activer les moyens de support (113) du premier groupe (111) de barres (112) ; le premier élément de préhension (3) peut prendre un nombre précis de configurations auxquelles correspond une hauteur différente entre les barres du premier groupe (111).

7. Mode de fonctionnement d'une station d'empilage (1) d'éléments profilés en aluminium selon l'une quelconque des revendications précédentes, comprenant les étapes suivantes :
- le réglage du composant vertical de la distance entre les moyens de support (113) des barres d'appui (112) ;
- la disposition des éléments profilés sur les barres d'appui (112) qui ont été préalablement placées sur les moyens de support (113) du premier groupe (111).

8. Procédé selon la revendication 7, **caractérisé en ce que** la régulation entre le composant vertical de la distance entre les moyens de support (113) comprend le déplacement d'au moins une partie des barres d'appui (112) supportées par lesdits moyens de support (113).
